Europäisches Patentamt

European Patent Office

Office européen des brevets

(11) Publication number: **0 342 013**
**A2**

## EUROPEAN PATENT APPLICATION

(21) Application number: 89304745.6

(22) Date of filing: 10.05.89

(51) Int. Cl.⁴: **G 01 M 3/16**

(30) Priority: 13.05.88 JP 116343/88

(43) Date of publication of application:
15.11.89 Bulletin 89/46

(84) Designated Contracting States:
AT BE CH DE ES FR GB GR IT LI LU NL SE

(71) Applicant: JUNKOSHA CO. LTD.
25-25, Miyasaka 2-chome
Setagaya-ku Tokyo 156 (JP)

(72) Inventor: Akiba, Juji
1-27-202, 494 Shimo-Kayama Hitaka-machi
Iruma-gun Saitama (JP)

Sugibuchi, Hiroyuki
N-306 Kotesashi-Hights 3-16 Kotesashi-machi
Tokorozawa-shi Saitama (JP)

(74) Representative: Knott, Stephen Gilbert et al
MATHISEN, MACARA & CO. The Coach House 6-8
Swakeleys Road
Ickenham Uxbridge Middlesex UB10 8BZ (GB)

(54) Fluid leakage sensor.

(57) A leakage sensor (1A) comprising two conductors (4A) sandwiched between two sheets (3A,6A) of electrically insulating material, at least one (3A) of which has a plurality of paired openings (2A) exposing the conductors (4A) to the external environment, is provided with electromagnetic shielding means (5A) outwardly of the conductors (4A).

Fig.1.

EP 0 342 013 A2

## Description

## FLUID LEAKAGE SENSOR

The present invention relates to a fluid leakage sensor which is not adversely affected by external electrical noise.

The applicant has been engaged in the development of liquid leakage sensors, and examples of such sensors in which leakage is detected by detecting a change in electrical resistance caused by the penetration of a leaking liquid into the area between two conductors are disclosed in Japanese Laid-Open Utility Model Application No. 58-96248 and Japanese Patent Publication No. 59-47256.

In these sensors, however, erroneous detection due to induction frequently occurs when the sensors are installed near a source of electrical noise.

With the aim of overcoming this problem and providing a fluid leakage sensor which exhibits little or no erroneous detection due to induction, according to the invention there is provided a leakage sensor comprising a pair of spaced electrical conductors sandwiched between two sheets of electrically insulating material, at least one of the sheets having openings by which the conductors are exposed to the external environment, the sensor having electromagnetic shielding means disposed outwardly of the two conductors, and preferably along substantially all of the perimeter of the sensor.

The shielding means may comprise a second pair of electrical conductors extending along the length of the sensor at positions outwardly of and spaced from the pair of leakage sensing conductors.

Alternatively, the shielding means may take the form of a holder which is made of a conductive resin, preferably carbon-filled polytetrafluoroethylene, and which supports the insulating sheets of the sensor.

Thus, a fluid leakage sensor in accordance with the present invention is provided with an electromagnetic shielding material along substantially all of the peripheral portions of the sensor. Accordingly, most external electrical noise is absorbed by the electromagnetic shielding material, so that the two conductors which make up the leakage sensing electrodes show little susceptibility to induction.

Embodiments of the leakage sensor in accordance with the invention will now be described, by way of example only, with reference to the accompanying drawings, in which:-

Figure 1 is a perspective view of a first embodiment; and

Figures 2 and 3 are cross-sectional views of second and third embodiments respectively.

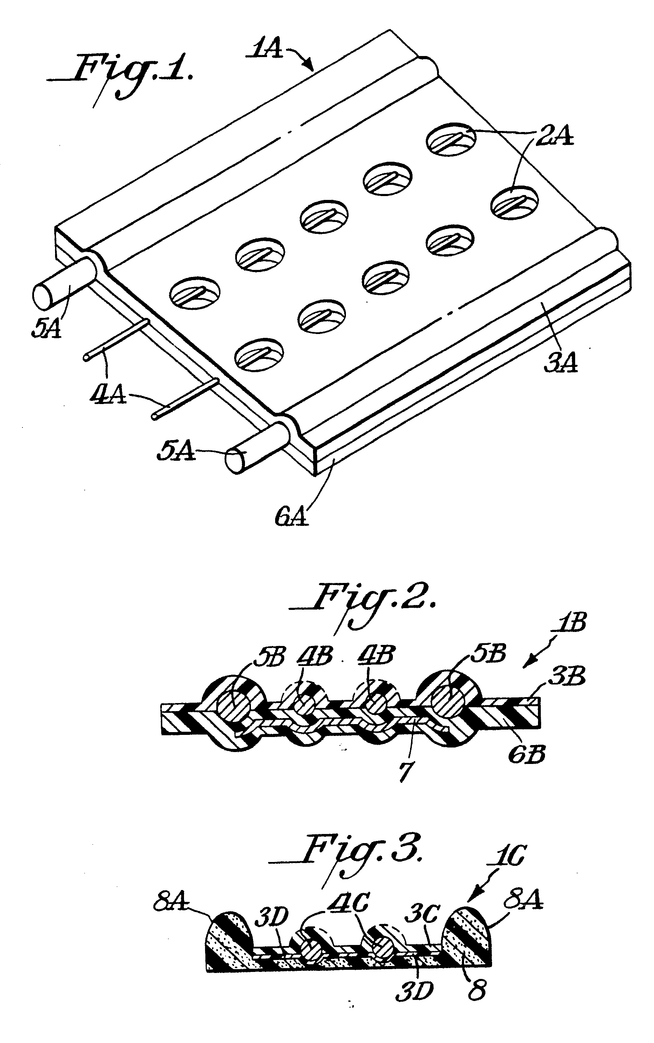

In the leakage sensor 1A shown in Figure 1, two electrical conductors 4A forming electrodes are installed on a surface of a tetrafluoroethylene resin film 3A so that they are aligned with and intersect two rows of holes 2A formed in the film 3A. Two conductors 5A, which are larger in diameter than the conductors 4A, are also installed on the film 3A outwardly from the conductors 4A, and a further tetrafluoroethylene resin film 6A is applied to the film 3A to sandwich the conductors 4A and 5A therebetween, the further film 6A also having two rows of holes which are aligned with the holes 2A of the film 3A. As a result of this construction most of the external noise reaching the sensor 1A, from opposite sides at least, is absorbed by the two conductors 5A, so that the two conductors 4A forming the electrodes show little susceptibility to induction.

In the embodiment shown in Figure 2, the leakage sensor 1B is similar to that of Figure 1 except that the tetrafluoroethylene resin film 6B, which sandwiches the electrode conductors 4B and the shield conductors 5B between it and the tetrafluoroethylene resin film 3B, has no holes formed in it. Thus, the electrode conductors 4B are exposed only at the two rows of holes formed in the film 3B. The film 6B contains a layer of conductive material 7 consisting of aluminium foil which runs along the length of the film 6B to supplement the shield conductors 5B. As a result of this construction, the two electrode conductors 4B are even less susceptible to induction during operation of the sensor 1B.

Figure 3 illustrates another embodiment of the present invention. In this example the leakage sensor IC comprises two conductors 4C clamped between a tetrafluoroethylene resin film 3C which has a plurality of holes arranged in two rows aligned with the conductors 4C as in the first embodiment, and a tetrafluoroethylene resin film 3D which has no holes. The sensor 1C further comprises a conductive holder 8 which supports the films 3C and 3D as shown and which is formed by extruding a tetrafluoroethylene resin in which carbon particles are admixed, the holder 8 having ribs 8A extending along its opposite side edges. As a result of this construction, most external noise is absorbed so that the two conductors 4C are substantially protected from induction during operation of the sensor.

The above examples thus illustrate fluid leakage sensors in accordance with the invention in which an electromagnetic shielding material is installed in at least the peripheral portions thereof outwardly of the electrodes formed by at least two spaced conductors mounted on an insulator. Accordingly, most external noise is absorbed by the electromagnetic shielding material, so that the conductors which make up the electrodes are subject to little induction. This is especially useful in cases where the detection signals are digitally processed.

It will of course be appreciated that the invention is not limited to the above described examples, and various modifications are possible within the scope of the invention. For example, the material and method of construction of the insulator, and of the electromagnetic shielding material, may be varied.

## Claims

1. A leakage sensor comprising a pair of spaced electrical conductors (4A;4B;4C) sandwiched between two sheets (3A,6A;3B,6B;3C,3D) of electrically insulating material, at least one of the sheets (3A;3B;3C) having openings (2A) by which the conductors are exposed to the external environment, characterised in that the sensor has electromagnetic shielding means (5A;5B,7;8,8A) disposed outwardly of the two conductors (4A;4B;4C).

2. A sensor according to claim 1 wherein the electromagnetic shielding means comprises a second pair of electrical conductors (5A;5B) extending along the length of the sensor at positions outwardly of and spaced from the leakage sensing conductors (4A;4B).

3. A sensor according to claim 1 wherein the electromagnetic shielding means comprises a holder (8,8A) which is made of an electrically conductive resin and which supports the insulating sheets (3C,3D) of the sensor.

4. A sensor according to claim 3 wherein the conductive resin is carbon-filled polytetrafluoro-ethylene.

*Fig.1.*

1A
2A
5A
4A
3A
5A
6A

*Fig.2.*

1B
5B  4B  4B  5B
3B
6B
7

*Fig.3.*

1C
8A  3D  4C  3C  8A
8
3D